## Europäisches Patentamt
## European Patent Office
## Office européen des brevets

(19)

(11) Veröffentlichungsnummer: **0 128 582**
**B1**

(12) **EUROPÄISCHE PATENTSCHRIFT**

(45) Veröffentlichungstag der Patentschrift: **28.11.90**

(51) Int. Cl.⁵: **B 60 T 8/00**

(21) Anmeldenummer: **84106738.2**

(22) Anmeldetag: **13.06.84**

(54) **Antiblockierregelsystem.**

(30) Priorität: **14.06.83 DE 3321370**

(43) Veröffentlichungstag der Anmeldung:
**19.12.84 Patentblatt 84/51**

(45) Bekanntmachung des Hinweises auf die
Patenterteilung:
**28.11.90 Patentblatt 90/48**

(84) Benannte Vertragsstaaten:
**DE FR GB IT SE**

(56) Entgegenhaltungen:
**DE-A-2 259 929**
**DE-A-2 422 147**
**GB-A-2 026 113**
**US-A-3 797 892**

(73) Patentinhaber: **ROBERT BOSCH GMBH**
**Postfach 50**
**D-7000 Stuttgart 1 (DE)**

(72) Erfinder: **Leiber, Heinz, Ing. grad.**
**Theodor-Heuss-Strasse 34**
**D-7141 Oberriexingen (DE)**

(74) Vertreter: **Kammer, Arno, Dipl.-Ing.**
**ROBERT BOSCH GmbH Zentralabteilung**
**Patente Postfach 50**
**D-7000 Stuttgart 1 (DE)**

EP 0 128 582 B1

**Beschreibung**

Die Erfindung geht aus von einem Antiblockierregelsystem nach der Gattung des Hauptanspruches.

Es ist bekannt, in Fahrzeugen Antiblockierregelsysteme zu verwenden, bei denen aus den Signalen von Raddrehzahlgebern Steuersignale erzeugt werden, die der Fahrzeugverzögerung, der Fahrzeugbeschleunigung und dem Schlupf zwischen den Rädern und der Fahrbahn entsprechen. In Abhängigkeit von Grenzwerten dieser Steuersignale werden bei Blockierneigung der Räder die einzelnen Radbremsen derart angesteuert, daß die Räder des Fahrzeugs jeweils kurz unterhalb der Blockiergrenze betrieben werden.

Bei Fahrbahnen mit stark asymmetrischen Reibbeiwert kann es dann, wenn die Räder der einen Fahrzeugseite sich auf trockenem Untergrund befinden und die Räder der anderen Fahrzeugseite beispielsweise auf einer Eisplatte, zu erheblichen Giermomenten, d.h. Momenten um die Hochachse des Fahrzeugs kommen, da die Räder auf der trockenen Fahrbahn greifen und das Fahrzeug verzögert, die Räder auf der schlüpfrigen Fahrbahnseite jedoch nicht. Dies gilt insbesondere für Schwerlastfahrzeuge.

Um das Auftreten von zu hohen Giermomenten zu vermeiden, ist es bekannt, die Bremsen auf der Fahrzeugseite mit dem höheren Reibbeiwert in Abhängigkeit von den Bremsen auf der Seite mit dem niedrigen Reibbeiwert zu steuern. Hierzu ist es beispielsweise bekannt, den Bremsdruck auf der Fahrzeugseite mit dem hohen Reibbeiwert zunächst nicht abzusenken, jedoch auch nicht zu erhöhen, bis eine Wiedererhöhung auf der Seite mit dem niedrigen Reibbeiwert auftritt. Auch in diesem Falle wird der Druck auf der Seite mit dem hohen Reibbeiwert jedoch nur in einem bestimmten Verhältnis der Werte der Fahrzeugseite mit dem niedrigen Reibbeiwert erhöht.

Ein derartiges Antiblockierregelsystem ist beispielsweise aus der DE-A-28 30 809 bekannt.

Unter extremen Fahrbedingungen, insbesondere bei besonders hohen Reibbeiwertunterschieden zwischen beiden Fahrzeugseiten und remanenten Bremsmomenten auf der Fahrzeugseite mit dem niedrigen Reibbeiwert, die durch erhöhte Lagerreibung oder schlecht lösende Bremsen hervorgerufen werden, kann es bei dieser Lösung noch zu einem relativ langen Bremsweg kommen, weil bei einer Wechselwirkung der oben beschriebenen Art der Druckaufbau auf der Fahrzeugseite mit hohem Reibbeiwert zu lange verzögert wird. Zur Verbesserung wird des halb in einer älteren DE-Patentanmeldung P 32 09 369.1 (DE-A-3 209 369) vorgeschlagen, den Bremsdruck ($P_L$) des Rades mit höherem Reibbeiwert durch ein Zwangssteuersignal ($E_z$) zu erhöhen, wenn bei Einsetzen des Antiblockierregelsystems die Zeit der Druckabsenkung oder die Zeit bis zum Einsetzen der erneuten Druckerhöhung am Rad mit niedrigerem Reibbeiwert eine vorgegebene Zeitdauer ($t_0$) überschreitet.

Dies hat den Vorteil, daß ein optimaler Kompromiß zwischen geringem Giermoment und kurzem Bremsweg erzielt wird. Bei der älteren Anmeldung kann eine besonders einfache gesteuerte Erhöhung des Bremsdruckes auf der Fahrzeugseite mit hohem Reibbeiwert dadurch erzielt werden, daß das zeitliche Auftreten der Ansteuersignale für das Ein- oder Auslaßventil der Bremsen der Fahrzeugseite mit niedrigem Reibbeiwert überwacht wird.

Um den Eingriff in die Bremsdruckregelung den verschiedenen Fahrsituationen anzupassen, ist in der älteren Anmeldung vorgesehen, diesen Eingriff von der Fahrgeschwindigkeit abhängig zu machen.

Die Problematik der Giermomentenbegrenzung ist für Fahrzeuge mit großem positiven Lenkrollradius von Interesse, welche vornehmlich beim Abbremsen bei asymmetrischen Fahrbahnen wirksam sein soll. Die Giermomentenbegrenzung ist ebenso wirksam für Fahrzeuge, die bei hohen Geschwindigkeiten auf asymmetrischen Fahrbahnen gut beherrschbar abgebremst werden sollen.

Dieselben unterschiedlichen Bremskräfte treten jedoch bei Kurvenbremsungen bei hoher Querbeschleunigung auf. Hier ist jedoch eine Giermomentenbegrenzung, die zu Beginn der Abbremsung nicht die optimalen Bremskräfte zuläßt, schädlich. In diesem Fall muß das Fahrzeug zumindest an der Vorderachse voll gebremst werden, damit das Fahrzeug aus dem Kritischen Grenzgeschwindigkeitsbereich herauskommt. Dies wird durch die erfindungsgemäße Ausbildung des Systems erreicht. Die Erfindung ist zwar für das Antiblockierregelsystem gemäß der älteren deutschen Patentanmeldung P 32 09 369.1 von besonderem Interesse, jedoch nicht auf diese Anwendung beschränkt.

Durch Verwendung eines Querbeschleunigungsgebers kann die Bremsung in der Kurve von einer Bremsung auf einer asymmetrischen Fahrbahn unterschieden werden. Damit wird die gewünschte Fahrstabilität bei Kurvenbremsung erreicht und zugleich die gewünschte Verbesserung der Beherrschbarkeit durch Wirksamwerden der Giermomentenbegrenzung auf asymmetrischen Fahrbahnen. Die Verwendung von Beschleunigungsgebern zur Kurvenerkennung ist an sich bekannt, z.B. aus der US-PS 3 797 892. Dort wird durch ein Querbeschleunigungssignal von select-high auf select-low umgeschaltet.

Anhand der Zeichnung wird eine Ausführungsform der Erfindung sowie verschiedene Druckverläufe erläutert. Es zeigen:

Fig. 1 den Verlauf des Bremsdruckes der linken und rechten Fahrzeugseite bei einem Antiblokkierregelsystem mit Giermomentausgleich gemäß der älteren deutschen Anmeldung P 32 09 369.1;

Fig. 2 ein Blockschaltbild einer Ausführungsform eines erfindungsgemäßen Antiblockierregelsystems;

Fig. 3 und 4 den Bremsdruckverlauf bei diesem System;

Fig. 5 den Bremsdruckverlauf bei Kurvenerkennung.

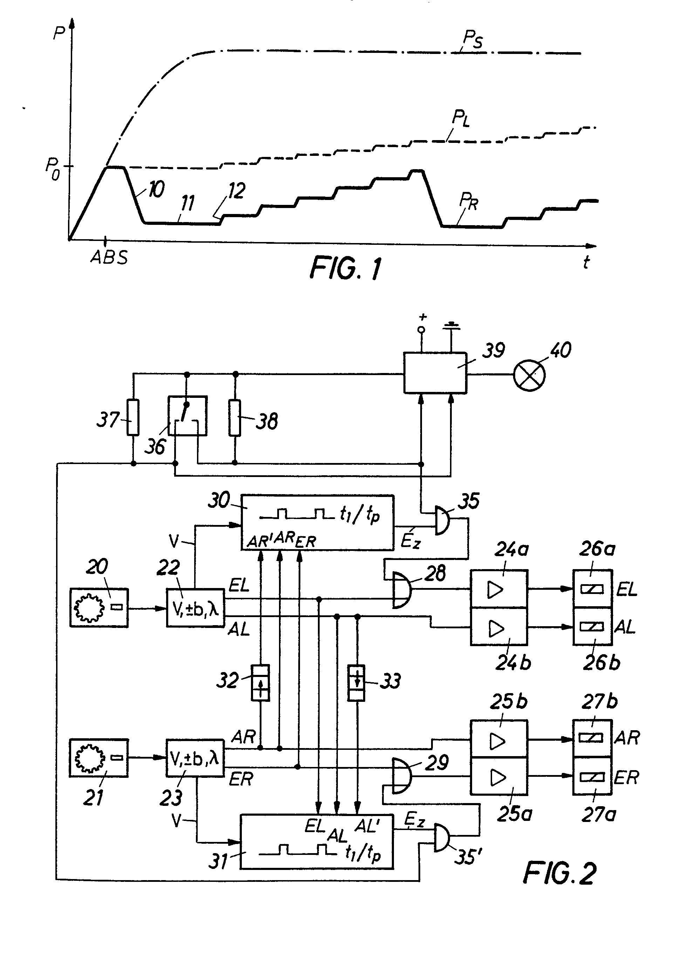

In Fig. 1 ist der Bremsdruck P über der Zeit t aufgetragen. Zu einem Zeitpunkt, in dem das Antiblockierregelsystem ABS wirksam wird, wird nicht mehr der Steuerdruck $P_S$ vorgegeben, sondern der Bremsdruck wird zunächst auf einem Wert $P_O$ konstant gehalten. In der nachfolgenden Beschreibung wird auf den Fall abgestellt, daß die rechte Fahrzeugseite sich auf einem Untergrund mit niedrigem Reibbeiwert (Schnee, Eis oder dgl.) befindet, während die linke Fahrzeugseite sich auf einer griffigen Fahrbahn befindet. Demzufolge fällt auf der rechten Fahrzeugseite der Druck $P_R$ bei 10 ab, geht bei 11 in eine Konstantphase über und wird bei 12 getaktet wieder erhöht. Um zu hohe Giermomente des Fahrzeugs, d.h. Momente um die Hochachse, zu vermeiden, sind im Stand der Technik Systeme bekannt, die den Druck der linken Fahrzeugseite zunächst konstant halten und dann bei 12 entsprechend dem getakteten Aufbau des Druckes $P_R$ der rechten Fahrzeugseite erhöhen, vorzugsweise jedoch in geringeren Stufen.

Fig. 2 zeigt ein Blockschaltbild einer Ausführungsform eines erfindungsgemäßen Antiblockierregelsystems. Dabei sind zwei identische Kanäle für die linke und die rechte Fahrzeugseite vorgesehen. Der Kanal der linken Fahrzeugseite besteht aus einem Drehzahlgeber 20, der auf eine Signalaufbereitungsschaltung 22 arbeitet. Diese wiederum ist an Ansteuerschaltungen 24a, 24b für das linke Einlaßventil 26a bzw. das linke Auslaßventil 26b angeschlossen. Der Kanal der rechten Fahrzeugseite besteht aus entsprechenden Elementen 21, 23, 25a, 25b, 27a, 27b.

In den Signalaufbereitungsschaltungen 22, 23 werden der Fahrgeschwindigkeit v, der Fahrzeugbeschleunigung +b, der Fahrzeugverzögerung −b und dem Schlupf λ zwischen Rad und Fahrbahn entsprechende Signale gebildet und es werden Ansteuersignale EL, AL, ER, AR für die Ein- bzw. Auslaßventile der linken bzw. rechten Fahrzeugseite gebildet, die den Ventile 26, 27 über die Ansteuerschaltungen 24, 25 zugeführt werden.

Um die zwangsweise Erhöhung des Bremsdruckes an dem Rad mit höherem Reibbeiwert zu ermöglichen, ist in die Leitungen für die Einlaßventile jeweils ein ODER-Gatter 28 bzw. 29 vor die entsprechende Ansteuerschaltung 24a bzw. 25a geschaltet. Der weitere Eingang der ODER-Gatter 28 bzw. 29 ist mit dem Zwangssteuersignal $E_z$ beaufschlagt, das von einem Taktgenerator 30 bzw. 31 erzeugt wird. Dabei ist der Taktgenerator 30 der linken Fahrzeugseite mit den Einlaß- und Auslaßventilen ER, AR der rechten Fahrzeugseite beschaltet und zusätzlich mit einem über ein Verzögerungsglied 32 erzeugten Signal AR', das dann auftritt, wenn das Signal AR länger als eine Zeitdauer $t_0$ ansteht, die im Verzögerungsglied 32 vorgegeben ist. Entsprechende symmetrische Verbindungen bestehen von der linken Fahrzeugseite zum Taktgenerator 31 der rechten Fahrzeugseite, wobei wiederum ein Zeitglied 33 die Zeit $t_0$ darstellt. Schließlich sind beide Taktgeneratoren 30, 31 noch mit einem fahrgeschwindigkeitsabhängigen Signal v beaufschlagt, das von den Signalaufbereitungsschaltungen 22, 23 zugeführt wird. Die Taktgeneratoren 30, 31 erzeugen auf den Ausgang $E_z$ ein Signal, das bei Auftreten des Signals ER im anderen Kanal beginnt und nach Ablauf einer Zeit in eine Impulsfolge mit einem Tastverhältnis $t_1/t_p$ übergeht. Die Impulse des Taktgenerators 30 werden nur dann auf den Ausgang $E_z$ durchgeschaltet, wenn die Regelung arbeitet, wenn weiterhin ein Signal AR' oder kein Signal ER länger als $t_0$ (weiteres Zeitglie dim Taktgenerator) anliegt und wenn schließlich keine Bremsdruckerhöhung auf der Fahrzeugseite mit niedrigem Reibbeiwert vorgenommen wird. Ein zu langes Absenken des Bremsdrucks auf der Fahrzeugseite mit niedrigem Reibbeiwert wird dadurch erkannt, daß entweder das Auslaßventil zu lange geöffnet wird (Signal AR') oder daß eine Erhöhung des Bremsdrucks zu lange auf sich warten läßt.

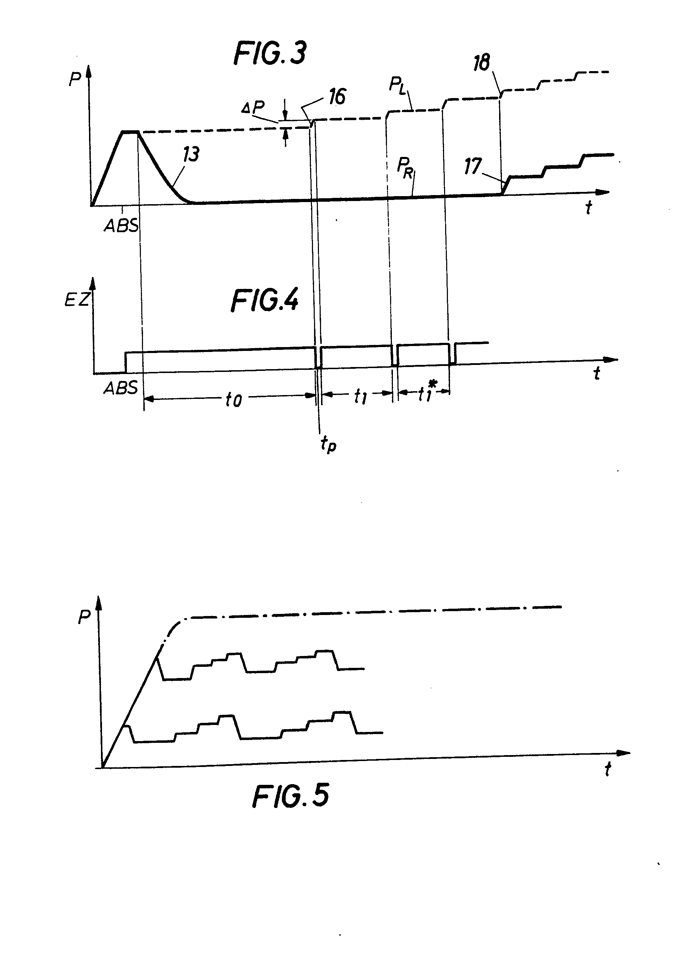

Gelangt demnach die Schaltung gemäß Figur 2 in eine Situation, in der das Auslaßventil der rechten Fahrzeugseite zu lange öffnet, so daß der Bremsdruck der rechten Fahrzeugseite zu weit abfällt, oder das Signal ER, zu lange ausbleibt, so führt dies nachdem zuerst das Einlaßventil geschlossen gehalten wurde, zu einem Durchsteuern des Taktsignales des Taktgenerators 30, so daß das Signal $E_z$ über das ODER-Gatter 28 in den Einlaßkanal der linken Fahrzeugseite gelangt und damit im eingestellten Tastverhältnis $t_1/t_p$ eine sukzessive Bremsdruckerhöhung der linken Fahrzeugseite bewirken. Dies ist in Fig. 3 und 4 dargestellt. Dort ist gezeigt, daß nach Wirksamwerden des Regelsystems (ABS) zuerst Druck konstantgehalten wird und die Zeit überwacht wird, in der der Bremsdruck $P_R$ der rechten Seite abgesenkt bleibt bzw. keine erneute Bremsdruckerhöhung eintritt. Hierzu ist eine Maximaldauer $t_0$ vorgegeben, nach der eine zwangsweise Erhöhung des Bremsdrucks $P_L$ der linken Fahrzeugseite vorgenommen wird. Hierzu wird das Zwangssteuersignal $E_z$ mit dem Takt $t_p/t_1$ vorgegeben, wobei $t_p$ die Impulspause und $t_1$ die Impulslänge für eine Bremsdruckerhöhung in Stufen $\triangle P$ auf der linken Fahrzeugseite darstellt. Da bei den üblichen Antiblockierregelsystemen die Bremsdruckerhöhung dadurch erzeugt wird, daß ein Einlaßventil bei geschlossenem Auslaßventil öffnet, ist die Druckstufe $\triangle P$ der Zeitdauer $t_p$ unmittelbar proportional.

Die getaktete Zwangserhöhung des Druckes $P_L$ auf der linken Fahrzeugseite wird nun solange fortgesetzt, bis auf der rechten Fahrzeugseite bei 17 wieder eine reguläre Druckerhöhung eintritt. Von diesem Zeitpunkt an wird dann der Druck $P_L$ der linken Fahrzeugseite, wie bei 18 dargestellt, vom Druck $P_R$ der rechten Fahrzeugseite geführt, wie dies im Stand der Technik bekannt ist.

Insgesamt ergibt sich damit eine erhebliche Verkürzung des Bremsweges, ohne daß dadurch das Giermoment merklich zunimmt.

In bevorzugter Ausgestaltung der Erfindung ist dabei vorgesehen, die Zeit $t_1$ oder $t_p$ zur Anpassung an verschiedene Fahrsituationen fahrgeschwindigkeitsabhängig einzustellen, wie dies in Figur 4 durch unterschiedliche Zeiten $t_1$, $t_1^*$ angedeutet ist. Dabei kann bevorzugt $t_p$ umgekehrt proportional zur Fahrgeschwindigkeit und $t_1$ proportional zur Fahrgeschwindigkeit eingestellt werden.

In Fig. 2 sind noch zusätzlich zwei UND-Gatter 35 und 35' eingeschaltet, durch die die Ausgänge $E_z$ der Taktgeneratoren 30 und 31 gesperrt werden können. Die Sperrung erfolgt, wenn ein Querbeschleunigungsgeber 36 je nach Richtung der Querbeschleunigung auf seinem einen oder anderen Ausgang ein Signal augrund des Überschreitens einer vorgegebenen Querbeschleunigungsschwelle (z.B. 0,3 g) abgibt. Dies bedeutet, daß bei Durchfahren einer Kurve dies durch den Querbeschleunigungsgeber 36 erkannt wird, und damit das Ausgangssignal $E_z$ (Konstanthalten oder Takten des Einlaßventils des belasteten Rads) unterbrochen und damit der Bremsdruck schnell erhöht wird.

Den Schaltern des Querbeschleunigungsgebers 36 sind Widerstände 37 und 38 parallel geschaltet, denen von einer Überwachungsschaltung 39 ein Strom eingeprägt ist. Wird ein elektrischer Anschluß des Gebers unterbrochen, so wird die Änderung dieses Stroms in der Schaltung 39 erkannt und durch eine Warnlampe 40 angezeigt.

Fig. 5 zeigt die Verläufe der Drucke an den beiden Radbremsen, wenn durch den Querbeschleunigungsgeber die Giermomentenbegrenzung ausgeschaltet ist.

## Patentansprüche

1. Antiblockierregelsystem für Fahrzeuge mit Raddrehzahlgebern (20, 21), Signalaufbereitungsschaltungen (22, 23) zur Erzeugung von Beschleunigungs- (+b), Verzögerungs- (−b) und/oder Schlupfwerten (λ) und mit Ansteuerschaltungen (24a, 24b; 25a, 25b) zum Betätigen von Radbremsen, wobei zur Vermeidung hoher Giermomente bei asymmetrischem Reibbeiwert der Fahrbahn der Bremsdruck ($P_L$) am Rad mit höherem Reibbeiwert in Abhängigkeit vom Bremsdruck ($P_R$) am Rad mit niedrigerem Reibbeiwert begrenzt wird, dadurch gekennzeichnet, daß ein Querbeschleunigungsgeber vorgesehen ist, der ein von der Querbeschleunigung des Fahrzeuges gegenüber der Fahrtrichtung abhängiges Signal abgibt und daß dieses Signal den Ansteuerschaltungen (24, 25) zuführbar ist, um bei Vorliegen von Querbeschleunigungen vorgegebener Größe die Begrenzung des Bremsdrucks zu ändern oder aufzuheben.

2. Antiblockierregelsystem nach Anspruch 1, dadurch gekennzeichnet, daß eine Änderung oder Aufhebung der Begrenzung des Bremsdrucks nur an den Vorderrädern erfolgt.

3. Antiblockierregelsystem nach einem der Ansprüche 1 oder 2, dadurch gekennzeichnet, daß Schaltmittel vorgesehen sind, um den Querbeschleunigungsgeber zu überwachen.

## Revendications

1. Système de réglage à antiblocage pour véhicules, avec des capteurs de rotation des roues (20, 21) des circuits de surveillance de signaux (22, 23) pour produire des valeurs d'accélération (+b), de ralentissement (−b) et/ou de patinage λ et avec des circuits de commande (24a, 24b; 25a, 25b) pour actionner les freins de roue, limitant la pression de freinage ($P_L$) sur la roue à coefficient de frottement élevé en fonction de la pression de freinage ($P_R$) sur la roue à faible coefficient de frottement pour éviter des couples d'embardée élevés sur des routes à coefficient de frottement dissymétriques, caractérisé en ce qu'on prévoit un accéléromètre transversal qui délivre un signal dépendant de l'accélération transversale du véhicule, par rapport au sens de roulage et qu'on injecte ce signal aux circuits de commande (24, 25) pour modifier ou neutraliser la limitation de pression de freinage quand il y a des accélérations transversales d'importance donnée.

2. Système de réglage à antiblocage selon la revendication 1, caractérisé en ce que n'a lieu une modification ou une neutralisation de la limitation de pression de freinage ne se produisent que sur les roues avant.

3. Système de réglage à antiblocage selon l'une des revendications 1 ou 2, caractérisé en ce que des circuits sont prévus pour surveiller l'accéléromètre transversal.

## Claims

1. Anti-locking regulation system for vehicles having wheel speed sensors (20, 21), signal conditioning circuits (22, 23) for producing acceleration values (+b), deceleration values (−b) and/or slip values (λ) and having control circuits (24a, 24b; 25a, 25b) for actuating wheel brakes, in which, in order to avoid high yawing moments in the case of an asymmetrical coefficient of friction of the roadway, the brake pressure ($P_L$) at the wheel with the higher coefficient of friction is limited as a function of the brake pressure ($P_R$) at the wheel with the lower coefficient of friction, characterized in that a side acceleration sensor is provided which emits a signal dependent on the side acceleration of the vehicle relative to the direction of travel and in that this signal can be fed to the control circuits (24, 25) in order to change or cancel the limitation of the brake pressure when side accelerations of stipulated magnitude are present.

2. Anti-locking regulation system according to Claim 1, characterized in that a change or cancellation of the limitation of the brake pressure takes place only at the front wheels.

3. Anti-locking regulation system according to either of Claims 1 or 2, characterized in that switching means are provided in order to monitor the side acceleration sensor.

FIG. 1

FIG.2

1

# FIG.3

# FIG.4

# FIG.5